# EUROPEAN PATENT APPLICATION

(11) **EP 4 525 107 A1**
(43) Date of publication of application: **19.03.2025**
(21) Application number: 23831649.1
(22) Date of filing: 30.06.2023
(51) Int. Cl.: H01M 8/1213, H01M 8/04, H01M 8/12, H01M 8/1226, H01M 8/2475

(54) **ELECTROCHEMICAL CELL, ELECTROCHEMICAL CELL DEVICE, MODULE, AND MODULE ACCOMMODATING DEVICE**

(30) Priority: 30.06.2022 JP 2022106388
(71) Applicant: Kyocera Corporation, Kyoto-shi, Kyoto 612-8501 (JP)
(72) Inventor: SHIRAMOMO, Sasuke, Kyoto-shi, Kyoto 612-8501 (JP)
(74) Representative: Viering, Jentschura & Partner mbB Patent- und Rechtsanwälte
(86) International application number: PCT/JP2023/024523
(87) International publication number: WO 2024/005210

(57) **Abstract**

An electrochemical cell includes an element portion, a support body made of metal, and an oxide layer. The element portion includes a solid electrolyte layer, and a first electrode and a second electrode with the solid electrolyte layer therebetween. The support body contains chromium and supports the element portion. The oxide layer is located between the first electrode and the support body and contains a metal component. The oxide layer has a porosity lower than that of the first electrode.

## Description

### TECHNICAL FIELD

The present disclosure relates to an electrochemical cell, an electrochemical cell device, a module, and a module housing device.

### BACKGROUND OF INVENTION

In recent years, various fuel cell stack devices, each including a plurality of fuel cells, have been proposed as next-generation energy. A fuel cell is a type of electrochemical cell that can obtain electrical power by using a fuel gas such as a hydrogen-containing gas and an oxygen-containing gas such as air.

### CITATION LIST

### PATENT LITERATURE

Patent Document 1: WO 2020/218431

### SUMMARY

An electrochemical cell according to an aspect of an embodiment includes an element portion, a support body made of metal, and an oxide layer. The element portion includes a solid electrolyte layer, and a first electrode and a second electrode with the solid electrolyte layer therebetween. The support body contains chromium and supports the element portion. The oxide layer is located between the first electrode and the support body and contains a metal component. The oxide layer has a porosity lower than that of the first electrode.

An electrochemical cell according to an aspect of an embodiment includes an element portion, a support body made of metal, an adhesive layer, and an oxide layer. The support body contains chromium and supports the element portion. The adhesive layer is located between the element portion and the support body. The oxide layer is located between the adhesive layer and the support body and contains a metal component. The oxide layer has a porosity lower than that of the adhesive layer.

An electrochemical cell device of the present disclosure includes a cell stack including the electrochemical cell described above.

A module of the present disclosure includes the electrochemical cell device described above and a storage container housing the electrochemical cell device.

A module housing device of the present disclosure includes the module described above, an auxiliary device operating the module, and an external case housing the module and the auxiliary device.

### BRIEF DESCRIPTION OF THE DRAWINGS

FIG. 1A is a cross-sectional view illustrating an example of an electrochemical cell according to a first embodiment.
FIG. 1B is a side view of the example of the electrochemical cell according to the first embodiment as viewed from a side of an air electrode.
FIG. 1C is an enlarged cross-sectional view of a region A illustrated in FIG. 1A.
FIG. 1D is a cross-sectional view illustrating another example of the electrochemical cell according to the first embodiment.
FIG. 1E is a cross-sectional view illustrating another example of the electrochemical cell according to the first embodiment.
FIG. 2A is a perspective view illustrating an example of a cell stack device according to the first embodiment.
FIG. 2B is a cross-sectional view taken along line X-X illustrated in FIG. 2A.
FIG. 2C is a top view illustrating the example of the cell stack device according to the first embodiment.
FIG. 3 is an external perspective view illustrating an example of a module according to the first embodiment.
FIG. 4 is an exploded perspective view schematically illustrating an example of a module housing device according to the first embodiment.
FIG. 5A is a perspective view illustrating an example of the electrochemical cell having a flat-plate shape.
FIG. 5B is a partial cross-sectional view of the electrochemical cell illustrated in FIG. 5A.
FIG. 6 is a cross-sectional view illustrating another example of the electrochemical cell according to the first embodiment.
FIG. 7 is a cross-sectional view illustrating an example of the electrochemical cell according to a second embodiment.
FIG. 8A is a cross-sectional view illustrating another example of the electrochemical cell according to the second embodiment.
FIG. 8B is a cross-sectional view illustrating another example of the electrochemical cell according to the second embodiment.
FIG. 9A is a cross-sectional view illustrating an example of the electrochemical cell according to a third embodiment.
FIG. 9B is a cross-sectional view illustrating another example of the electrochemical cell according to the third embodiment.

### DESCRIPTION OF EMBODIMENTS

The fuel cell stack device mentioned above has room for enhancement in improving cell performance.

Provision of an electrochemical cell, an electrochemical cell device, a module, and a module housing device capable of improving performance is expected.

Embodiments of an electrochemical cell, an electrochemical cell device, a module, and a module housing device disclosed in the present application will now be described in detail with reference to the accompanying drawings. Note that this invention is not limited by the following embodiments.

Note that the drawings are schematic and that the dimensional relationships between elements, the proportions of the elements, and the like may differ from the actual ones. There may be differences between the drawings in terms of the dimensional relationships and proportions.

### First Embodiment

### Configuration of Electrochemical Cell

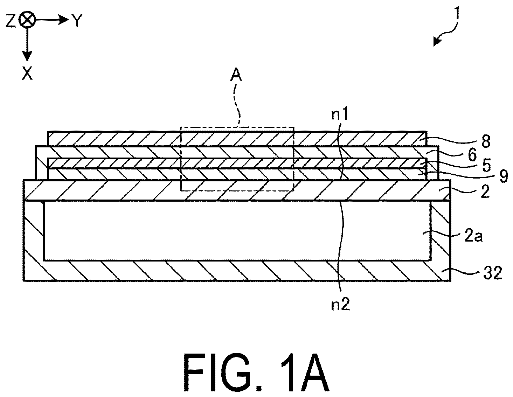

First, with reference to FIGs. 1A to 1C, an example of a solid oxide fuel cell will be described as an electrochemical cell according to a first embodiment. An electrochemical cell device may include a cell stack including a plurality of the electrochemical cells. The electrochemical cell device including the plurality of electrochemical cells is simply referred to as a cell stack device.

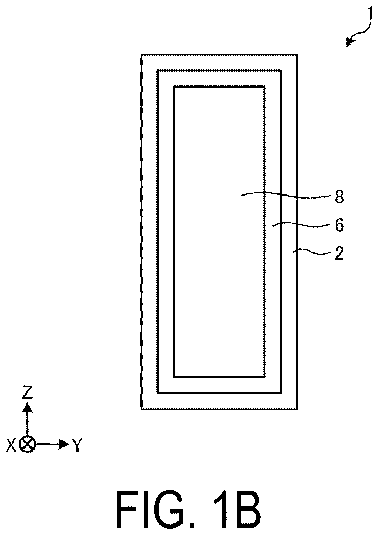

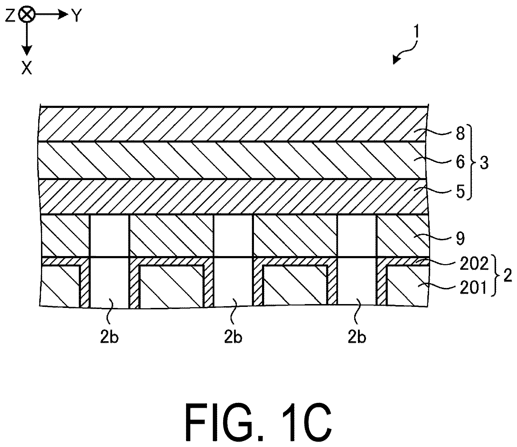

FIG. 1A is a cross-sectional view illustrating an example of the electrochemical cell according to the first embodiment. FIG. 1B is a side view of the example of the electrochemical cell according to the first embodiment as viewed from a side of an air electrode. FIG. 1C is an enlarged cross-sectional view of a region A illustrated in FIG. 1A. Note that FIGs. 1A to 1C each illustrate an enlarged part of a configuration of the electrochemical cell. Hereinafter, the electrochemical cell may be simply referred to as a cell.

As illustrated in FIGs. 1A to 1C, a cell 1 includes an element portion 3 in which a fuel electrode 5 as a first electrode, a solid electrolyte layer 6, and an air electrode 8 as a second electrode are layered, a support body 2, and an oxide layer 9.

The support body 2 is a member made of metal containing chromium. The support body 2 has electrical conductivity. The support body 2 may be, for example, stainless steel having thermal resistance, such as ferritic stainless steel or austenitic stainless steel. The support body 2 may be made of, for example, a nickel-chromium alloy or an iron-chromium alloy. The support body 2 may contain, for example, a metal oxide. The support body 2 may be made of, for example, one or more metal plates. The support body 2 electrically connects the cells 1 adjacent to each other in an X axis direction.

The support body 2 includes a first surface n1 and a second surface n2 located opposite to the first surface n1. The support body 2 includes an opening 2b located at a portion facing the element portion 3, specifically, at a portion contacting the oxide layer 9. The opening 2b penetrates between the first surface n1 and the second surface n2 in the X axis direction. The support body 2 includes a member 32 located outside a gas-flow passage 2a extending in a Z axis direction. The support body 2 allows the fuel gas flowing through the gas-flow passage 2a to flow to the element portion 3. A diameter of the opening 2b may be, for example, from 0.1 mm to 0.5 mm, particularly from 0.3 mm to 0.4 mm. An open area fraction in a region where the opening 2b is formed may be, for example, 10% or more.

The support body 2 may include a base member 201 and a covering portion 202. The covering portion 202 is located on a surface of the base member 201. The covering portion 202 has, for example, insulation properties. The covering portion 202 contains, for example, chromium oxide (Cr₂O₃). The covering portion 202 may have a higher chromium content than that of the base member 201, for example. With the covering portion 202 thus included, a durability of the support body 2 is enhanced. The covering portion 202 may contain a metal component different from chromium, such as manganese, for example. Note that the support body 2 may partially include the covering portion 202. The support body 2 may have a further layered structure.

The element portion 3 is located on the first surface n1 side of the support body 2. The element portion 3 is fixed to the support body 2 with the oxide layer 9 interposed therebetween. The element portion 3 includes the fuel electrode 5, the solid electrolyte layer 6, and the air electrode 8.

The fuel electrode 5 is a first electrode that comes into contact with a fuel gas which is a reducing gas. The fuel electrode 5 has gas permeability. An open porosity of the fuel electrode 5 may be, for example, within a range from 30% to 50%, particularly from 35% to 45%. The open porosity of the fuel electrode 5 may also be referred to as a porosity of the fuel electrode 5.

As a material of the fuel electrode 5, a commonly known material may be used. As the fuel electrode 5, a porous electrically conductive ceramic, for example, a ceramic containing ZrO₂ in which a calcium oxide, a magnesium oxide, or a rare earth element oxide is in solid solution, and Ni and/or NiO may be used. This rare earth element oxide may contain a plurality of rare earth elements selected from, for example, Sc, Y, La, Nd, Sm, Gd, Dy, and Yb. Hereinafter, ZrO₂ in which a calcium oxide, a magnesium oxide, or a rare earth element oxide is in solid solution may be referred to as stabilized zirconia. Stabilized zirconia may include partially stabilized zirconia.

The solid electrolyte layer 6 is an electrolyte and delivers ions between the fuel electrode 5 and the air electrode 8. At the same time, the solid electrolyte layer 6 has gas blocking properties, making leakage of the fuel gas and the oxygen-containing gas less likely.

A material of the solid electrolyte layer 6 may be, for example, ZrO₂ in which from 3 mole% to 15 mole% of a rare earth element oxide is in solid solution. The rare earth element oxide may contain, for example, one or more rare earth elements selected from Sc, Y, La, Nd, Sm, Gd, Dy, and Yb. The solid electrolyte layer 6 may contain, for example, ZrO₂ in which Yb, Sc, or Gd is in solid solution, CeO₂ in which La, Nd, or Yb is in solid solution, BaZrO₃ in which Sc or Yb is in solid solution, or BaCeO₃ in which Sc or Yb is in solid solution.

The air electrode 8 is a second electrode that comes into contact with the oxygen-containing gas. The air electrode 8 has gas permeability. An open porosity of the air electrode 8 may be, for example, within a range from 20% to 50%, particularly from 30% to 50%.

A material of the air electrode 8 is not particularly limited as long as the material is one generally used for an air electrode. The material of the air electrode 8 may be, for example, an electrically conductive ceramic such as a so-called ABO₃-type perovskite oxide.

The material of the air electrode 8 may be, for example, a composite oxide in which strontium (Sr) and lanthanum (La) coexist at the A site. Examples of such a composite oxide include LaₓSr₁₋ₓCo_{y}Fe_{1-y}O₃, LaₓSr₁₋ₓMnO₃, LaₓSr₁₋ₓFeO₃, and LaₓSr₁₋ₓCoO₃. Note that x is 0 < x < 1, and y is 0 < y < 1.

The element portion 3 may include an intermediate layer located between the solid electrolyte layer 6 and the air electrode 8. When the element portion 3 includes an intermediate layer, the intermediate layer has a function of a diffusion prevention layer, for example. When strontium (Sr) contained in the air electrode 8 diffuses into the solid electrolyte layer 6, a resistance layer of SrZrO₃ is formed in the solid electrolyte layer 6. The intermediate layer makes Sr diffusion less likely, thereby making SrZrO₃ formation less likely.

A material of the intermediate layer is not particularly limited as long as the material is not likely to cause the diffusion of elements between the air electrode 8 and the solid electrolyte layer 6 in general. The material of the intermediate layer may contain, for example, cerium oxide (CeO₂) in which rare earth elements other than cerium (Ce) are in solid solution. As such rare earth elements, for example, gadolinium (Gd) or samarium (Sm) may be used.

The oxide layer 9 is located between the support body 2 and the element portion 3. The oxide layer 9 is located between the first surface n1 of the support body 2 and the fuel electrode 5, and bonds the support body 2 and the element portion 3. The oxide layer 9 has electrical conductivity, for example.

The oxide layer 9 has a lower porosity than that of the fuel electrode 5. The porosity of the oxide layer 9 may be, for example, within a range from 1% to 10%, particularly from 3% to 8%. With the porosity of the oxide layer 9 being lower than that of the fuel electrode 5, an interface strength between the oxide layer 9 and the fuel electrode 5, that is, a bonding strength at a boundary portion between the oxide layer 9 and the fuel electrode 5 is improved, making peeling less likely. This improves the durability of the cell 1, making it possible to improve the cell performance. The porosities of the oxide layer 9, the fuel electrode 5, and the like are determined by, for example, observing a cross section of each portion with a scanning electron microscope (SEM) and taking a photograph of the cross section at a magnification of 3000, for example. Each porosity can be found by performing image processing on the photograph, identifying pores, and calculating a total surface area of the pores relative to the entire area of the image. The porosity of the oxide layer 9 and the porosity of the fuel electrode 5 may be compared by, for example, comparing average porosities thereof obtained by averaging the porosities calculated from cross-sectional photographs at any three locations of each portion.

The porosity of the oxide layer 9 may be less than 5%. When the porosity of the oxide layer 9 is less than 5%, metals such as Cr and Mn contained in the support body 2 are less likely to diffuse into the fuel electrode 5. This improves a durability of the fuel electrode 5. When the oxide layer 9 having a porosity of less than 5% is disposed on the support body 2, Cr is less likely to evaporate from the support body 2. This improves a durability of the cell 1.

The oxide layer 9 contains a metal component other than Cr. The oxide layer 9 contains, for example, an oxide of a first metal and a second metal different from the first metal. The first metal is, for example, titanium (Ti). The second metal is, for example, nickel (Ni). The second metal is dispersed inside the oxide layer 9. The second metal may be dispersed, for example, as metal particles or oxide particles. The first metal may be a metal other than Ti such as, for example, aluminum (Al) or silicon (Si). The first metal is unlikely to undergo a volume change even in contact with a reducing atmosphere, and is likely to maintain the porosity of less than 5%. The second metal may be a metal other than Ni such as, for example, copper (Cu), cobalt (Co), or zinc (Zn). The second metal has high electron conductivity and readily maintains electron conduction between the fuel electrode 5 and the support body 2. The oxide layer 9 may contain a trace amount of Cr.

The covering portion 202 of the support body 2 may contain a metal component contained in the oxide layer 9. Such a metal component may be, for example, the second metal. When the covering portion 202 in contact with the oxide layer 9 contains the same metal component as that of the oxide layer 9, an interface strength between the oxide layer 9 and the support body 2 is improved. This improves the durability of the cell 1, making it possible to improve the cell performance. With the covering portion 202 containing the second metal, which is contained in the oxide layer 9 and has high electron conductivity, the insulation properties of the covering portion 202 can be lowered, and the electron conduction between the fuel electrode 5 and the support body 2 can be easily maintained.

The oxide layer 9 may be located overlapping the support body 2 in plan view. That is, a portion facing the opening 2b of the support body 2 may be provided with a through hole that does not include the oxide layer 9 and penetrates the oxide layer 9 in a thickness direction. Such a through hole communicates with the opening 2b, facilitating the flow of a fuel gas flowing through the gas-flow passage 2a to the element portion 3. The oxide layer 9 is located on a surface of the covering portion 202, making growth of the covering portion 202 less likely. The Cr in the support body 2 is also less likely to diffuse, improving the durability of the cell 1. Thus, the cell performance can be improved.

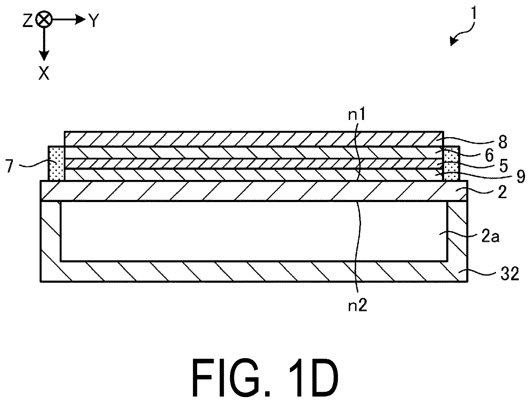

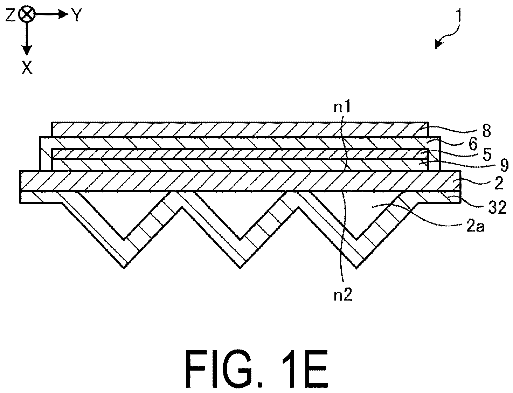

FIG. 1D and FIG. 1E are cross-sectional views illustrating other examples of the electrochemical cell according to the first embodiment.

In the example illustrated in FIG. 1A, a side surface of the fuel electrode 5 and a side surface of the oxide layer 9 are covered with the solid electrolyte layer 6 to hermetically seal the gas-flow passage 2a through which the fuel gas flows. As illustrated in FIG. 1D, the side surface of the fuel electrode 5 and the side surface of the oxide layer 9 may be covered and sealed with a sealing material 7 that is dense. The sealing material 7 covering the side surface of the fuel electrode 5 and the side surface of the oxide layer 9 may have electrical insulation properties. A material of the sealing material 7 may be glass or a ceramic, for example.

The gas-flow passage 2a of the support body 2 may be made of the member 32 having unevenness as illustrated in FIG. 1E.

### Configuration of Electrochemical Cell Device

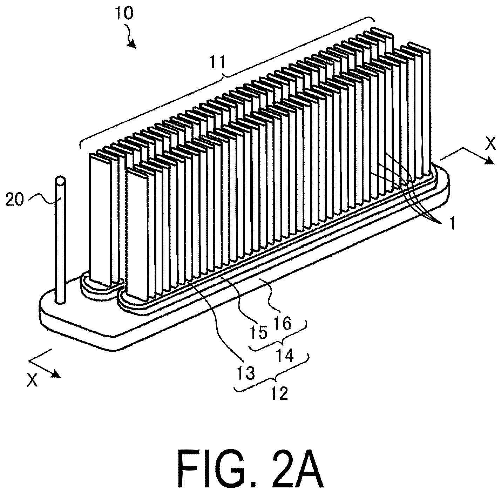

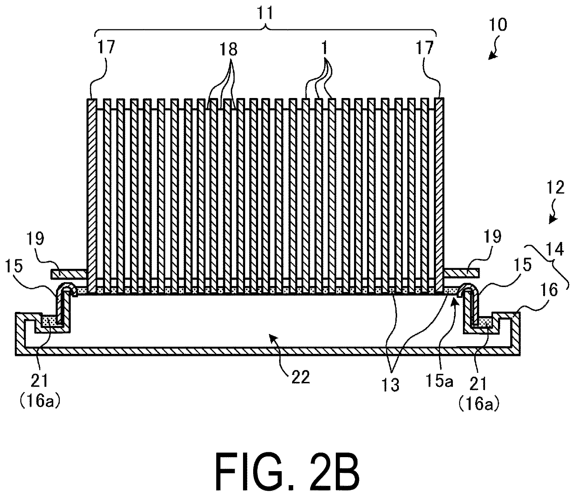

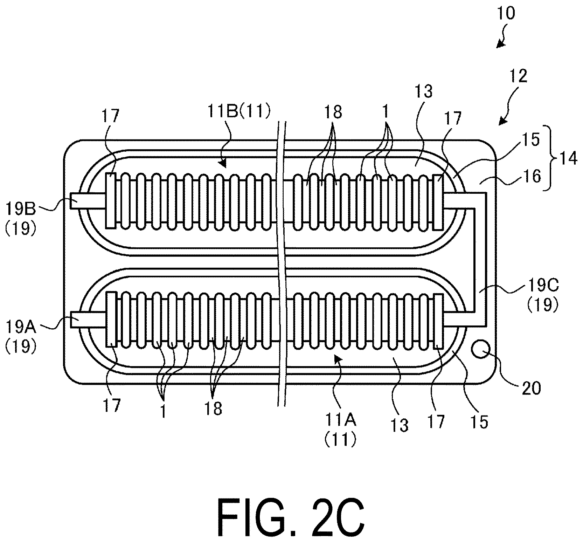

An electrochemical cell device according to the present embodiment using the electrochemical cell described above will now be described with reference to FIGs. 2A to 2C. FIG. 2A is a perspective view illustrating the example of the electrochemical cell device according to the first embodiment. FIG. 2B is a cross-sectional view taken along line X-X illustrated in FIG. 2A. FIG. 2C is a top view illustrating the example of the electrochemical cell device according to the first embodiment.

As illustrated in FIG. 2A, a cell stack device 10 includes a cell stack 11 including a plurality of the cells 1 arrayed (stacked) in the thickness direction (X axis direction) of each cell 1, and a fixing member 12.

The fixing member 12 includes a fixing material 13 and a support member 14. The support member 14 supports the cells 1. The fixing material 13 fixes the cells 1 to the support member 14. The support member 14 includes a support body 15 and a gas tank 16. The support body 15 and the gas tank 16 that constitute the support member 14 are made of metal and electrically conductive.

As illustrated in FIG. 2B, the support body 15 includes an insertion hole 15a into which lower end portions of the plurality of cells 1 are inserted. The lower end portions of the plurality of cells 1 and an inner wall of the insertion hole 15a are bonded by the fixing material 13.

The gas tank 16 includes an opening portion through which a reactive gas is supplied to the plurality of cells 1 via the insertion hole 15a, and a recessed groove 16a located in the periphery of the opening portion. An outer peripheral end portion of the support body 15 is bonded to the gas tank 16 by a bonding material 21, with which the recessed groove 16a of the gas tank 16 is filled.

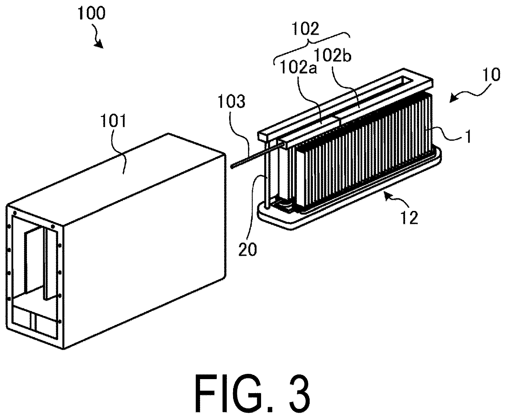

In the example illustrated in FIG. 2A, the fuel gas is stored in an internal space 22 formed by the support body 15 and the gas tank 16 that constitute the support member 14. The gas tank 16 includes a gas circulation pipe 20 connected thereto. The fuel gas is supplied to the gas tank 16 through this gas circulation pipe 20 and is supplied from the gas tank 16 to the gas-flow passages 2a (refer to FIG. 1A) inside the cells 1. The fuel gas supplied to the gas tank 16 is generated by a reformer 102 (refer to FIG. 3) described below.

A hydrogen-rich fuel gas can be produced, for example, by steam-reforming a raw fuel. When the fuel gas is produced by steam-reforming, the fuel gas contains water vapor.

In the example illustrated in FIG. 2A, two rows of the cell stacks 11, two support bodies 15, and the gas tank 16 are provided. The two rows of the cell stacks 11 each include a plurality of the cells 1. Each cell stack 11 is fixed to the support body 15 corresponding thereto. An upper surface of the gas tank 16 includes two through holes. Each support body 15 is disposed in the through hole corresponding thereto. The internal space 22 is formed by the one gas tank 16 and the two support bodies 15.

The insertion hole 15a has, for example, an oval shape in a top surface view. A length of the insertion hole 15a in an arrangement direction of the cells 1, that is, a thickness direction T, is longer than a distance between two end current collection members 17 located at both ends of the cell stack 11, for example. A width of the insertion hole 15a is, for example, greater than a length of the cell 1 in a width direction W (refer to FIG. 1A).

As illustrated in FIG. 2B, a bonding portion between the inner wall of the insertion hole 15a and the lower end portion of each of the cells 1 is filled with the fixing material 13 and solidified. Thus, the inner wall of the insertion hole 15a and the lower end portions of the plurality of cells 1 are bonded and fixed, and the lower end portions of the cells 1 are bonded and fixed to each other. The gas-flow passage 2a of each of the cells 1 communicates, at the lower end portion, with the internal space 22 of the support member 14.

As the fixing material 13 and the bonding material 21, materials having low electrical conductivity, such as glass, may be used. As the specific materials of the fixing material 13 and the bonding material 21, amorphous glass or the like may be used and, in particular, crystallized glass or the like may be used.

As the crystallized glass, for example, any one of SiO₂-CaO-based, MgO-B₂O₃-based, La₂O₃-B₂O₃-MgO-based, La₂O₃-B₂O₃-ZnO-based, and SiO₂-CaO-ZnO-based materials may be used and, in particular, a SiO₂-MgO-based material may be used.

As illustrated in FIG. 2B, electrically conductive members 18 are each interposed between the cells 1, among the plurality of cells 1, that are adjacent to each other. Each of the electrically conductive members 18 electrically connects in series one of the cells 1 to the other of the cells 1 adjacent to each other. More specifically, the electrically conductive member 18 connects the fuel electrode 5 of one of the cells 1 to the air electrode 8 of the other of the cells 1.

As illustrated in FIG. 2B, the end current collection members 17 are electrically connected to the cells 1 located at outermost sides in the arrangement direction of the plurality of cells 1. The end current collection members 17 are each connected to an electrically conductive portion 19 protruding outward from the cell stack 11. The electrically conductive portion 19 collects electricity generated by the cells 1 and conducts the electricity to the outside. Note that, in FIG. 2A, the end current collection members 17 are not illustrated.

As illustrated in FIG. 2C, the cell stack device 10 may be a single battery in which two cell stacks 11A, 11B are connected in series. In such a case, the electrically conductive portion 19 of the cell stack device 10 may include a positive electrode terminal 19A, a negative electrode terminal 19B, and a connection terminal 19C.

The positive electrode terminal 19A functions as a positive electrode when the electrical power generated by the cell stack 11 is output to the outside and is electrically connected to the end current collection member 17 on a positive electrode side in the cell stack 11A. The negative electrode terminal 19B functions as a negative electrode when the electrical power generated by the cell stack 11 is output to the outside and is electrically connected to the end current collection member 17 on a negative electrode side in the cell stack 11B.

The connection terminal 19C electrically connects the end current collection member 17 on the negative electrode side in the cell stack 11A and the end current collection member 17 on the positive electrode side in the cell stack 11B.

### Module

A module according to the embodiment of the present disclosure using the cell stack device 10 described above will be described below with reference to FIG. 3. FIG. 3 is an exterior perspective view illustrating the module according to the first embodiment. FIG. 3 illustrates a state in which front and rear surfaces, which are part of a storage container 101, are removed and the cell stack device 10 of the fuel cell housed therein is taken out rearward.

As illustrated in FIG. 3, a module 100 includes the storage container 101, and the cell stack device 10 housed in the storage container 101. The reformer 102 is disposed above the cell stack device 10.

Such a reformer 102 generates a fuel gas by reforming a raw fuel such as natural gas or kerosene and supplies the fuel gas to the cell 1. The raw fuel is supplied to the reformer 102 through a raw fuel supply pipe 103. Note that the reformer 102 may include a vaporizing unit 102a for vaporizing water and a reforming unit 102b. The reforming unit 102b includes a reforming catalyst (not illustrated) for reforming the raw fuel into a fuel gas. Such a reformer 102 can perform steam-reforming, which is a highly efficient reformation reaction.

The fuel gas generated by the reformer 102 is supplied to the gas-flow passages 2a (refer to FIG. 1A) of the cells 1 through the gas circulation pipe 20, the gas tank 16, and the support member 14.

In the module 100 having the configuration mentioned above, a temperature in the module 100 during normal power generation is about from 500°C to 1000°C due to combustion of gas and power generation by the cell 1.

Such a module 100 houses the cell stack device 10 with the improved cell performance as described above. This configuration makes it possible to provide the module 100 with the improved performance.

### Module Housing Device

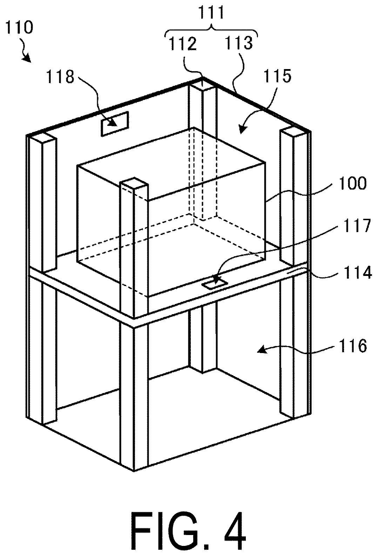

FIG. 4 is an exploded perspective view illustrating an example of a module housing device according to the first embodiment. A module housing device 110 according to the present embodiment includes an external case 111, the module 100 illustrated in FIG. 3, and an auxiliary device (not illustrated). The auxiliary device operates the module 100. The module 100 and the auxiliary device are housed in the external case 111. Note that, in FIG. 4, the configuration is partially omitted.

The external case 111 of the module housing device 110 illustrated in FIG. 4 includes a support 112 and an external plate 113. A dividing plate 114 vertically partitions the interior of the external case 111. The space above the dividing plate 114 in the external case 111 is a module housing chamber 115 for housing the module 100. The space below the dividing plate 114 in the external case 111 is an auxiliary device housing chamber 116 for housing the auxiliary device operating the module 100. Note that, in FIG. 4, the auxiliary device housed in the auxiliary device housing chamber 116 is omitted.

The dividing plate 114 includes an air circulation hole 117 for causing air in the auxiliary device housing chamber 116 to flow into the module housing chamber 115 side. The external plate 113 constituting the module housing chamber 115 includes an exhaust hole 118 for discharging air inside the module housing chamber 115.

In such a module housing device 110, the module 100 with the improved cell performance is provided in the module housing chamber 115 as described above. This configuration makes it possible to provide the module housing device 110 with the improved performance.

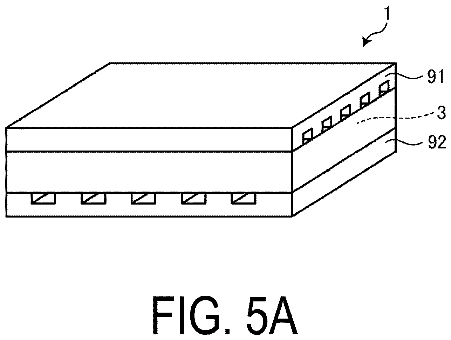

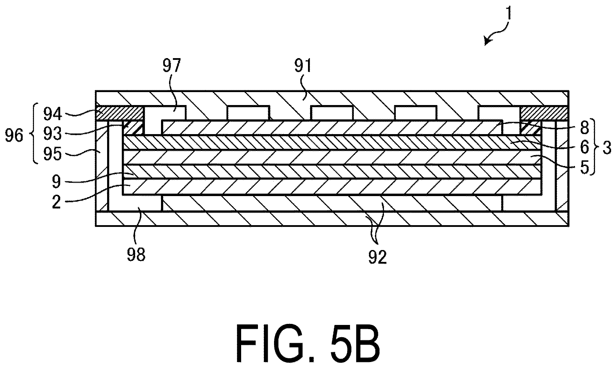

FIG. 5A and FIG. 5B are cross-sectional views illustrating yet another example of the electrochemical cell according to the first embodiment. FIG. 5A is a perspective view illustrating an example of the electrochemical cell having a flat-plate shape. FIG. 5B is a partial cross-sectional view of the electrochemical cell illustrated in FIG. 5A.

As illustrated in FIG. 5A and FIG. 5B, the cell 1 includes the element portion 3 in which the fuel electrode layer 5, the solid electrolyte layer 6, and the air electrode layer 8 are layered, the support body 2, the oxide layer 9, and electrically conductive members 91, 92. In an electrochemical cell device in which a plurality of flat-plate cells are layered, the plurality of cells 1 are electrically connected by the electrically conductive members 91, 92, which are metal layers adjacent to each other, for example. The electrically conductive members 91, 92 electrically connect the cells 1 that are adjacent to each other, and each includes a channel for supplying gas to the fuel electrode 5 or the air electrode 8.

As illustrated in FIG. 5B, the cell 1 includes a sealing material for hermetically sealing a channel 98 of a fuel gas and a channel 97 of an oxygen-containing gas of the flat-plate cell stack. The sealing material is a fixing member 96 of the cell 1, and includes a bonding material 93 and support members 94, 95, which constitute a frame. The bonding material 93 may be glass or may be a metal material such as silver solder.

The support member 94 may be a so-called separator that separates the channel 98 of the fuel gas and the channel 97 of the oxygen-containing gas. A material of the support members 94, 95 may be, for example, an electrically conductive metal, or may be an insulating ceramic. One or both of the support members 94, 95 may be an insulating material. When the support member 94 is a metal, the support member 94 may be formed integrally with the electrically conductive member 91. When the support member 95 is a metal, the support member 95 may be formed integrally with the electrically conductive member 92.

One of the support members 94, 95 has insulation properties and electrically insulates the two electrically conductive members 91, 92, which sandwich the flat-plate cell, from each other.

The oxide layer 9 is located between the support body 2 and the element portion 3. The oxide layer 9 is located between the support body 2 and the fuel electrode 5, and bonds the support body 2 and the element portion 3. The oxide layer 9 has electrical conductivity, for example.

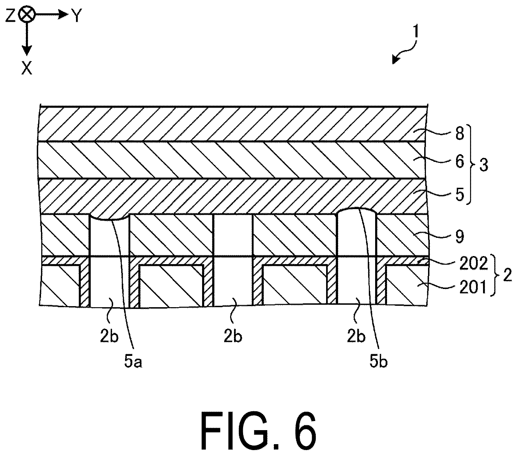

FIG. 6 is a cross-sectional view illustrating another example of the electrochemical cell according to the first embodiment. As illustrated in FIG. 6, the fuel electrode 5 may include a portion 5a protruding into the interior of the oxide layer 9 towards the opening 2b. With such a portion 5a, the bonding strength between fuel electrode 5 and the oxide layer 9 is improved, for example, further improving the durability of the cell 1. The fuel electrode 5 may include a portion 5b located away from the opening 2b.

### Second Embodiment

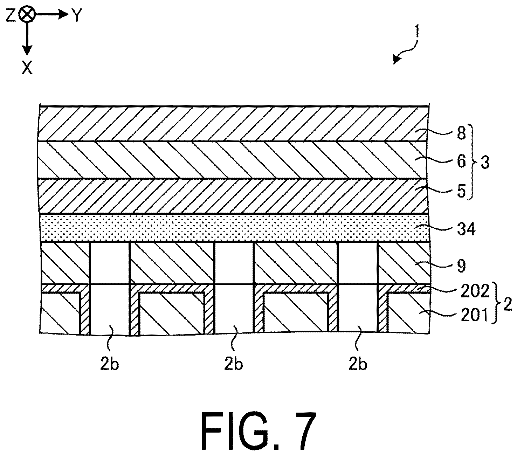

FIG. 7 is a cross-sectional view illustrating an example of the electrochemical cell according to a second embodiment. The cell 1 according to the present embodiment includes an adhesive layer 34 located between the element portion 3 and the oxide layer 9. The adhesive layer 34 bonds the element portion 3 and the oxide layer 9. The adhesive layer 34 has gas permeability, for example. The adhesive layer 34 may have electrical conductivity, for example.

The adhesive layer 34 may contain, for example, conductive particles such as Ni, Cu, Co, or Zn, and inorganic oxides such as TiO₂, Al₂O₃, SiO₂, rare earth element oxides (Y₂O₃, CeO₂, or the like), and transition metal oxides (Fe₂O₃, CuO, or the like). The adhesive layer 34 may also be located at a portion where the opening 2b is located, and may have an exposed surface.

The oxide layer 9 has a porosity (open porosity) lower than that of the adhesive layer 34. The open porosity of the adhesive layer 34 may be, for example, within a range from 20% to 40%, particularly from 25% to 35%. With the porosity of the oxide layer 9 being lower than that of the adhesive layer 34, an interface strength between the oxide layer 9 and the adhesive layer 34 is improved, making peeling less likely. This improves the durability of the cell 1, making it possible to improve the cell performance. The porosities of the oxide layer 9, the adhesive layer 34, and the like are determined by, for example, observing a cross section of each portion with a scanning electron microscope (SEM) and taking a photograph of the cross section at a magnification of 3000, for example. Each porosity can be found by performing image processing on the photograph, identifying pores, and calculating a total surface area of the pores relative to the entire area of the image. The porosity of the oxide layer 9 and the porosity of the adhesive layer 34 may be compared by, for example, comparing the average porosities thereof obtained by averaging the porosities calculated from cross-sectional photographs at any three locations of each portion.

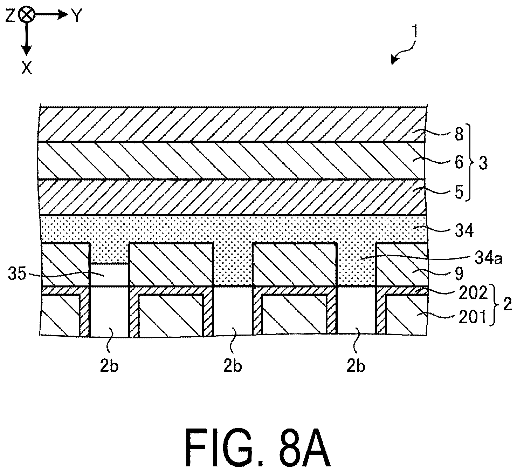

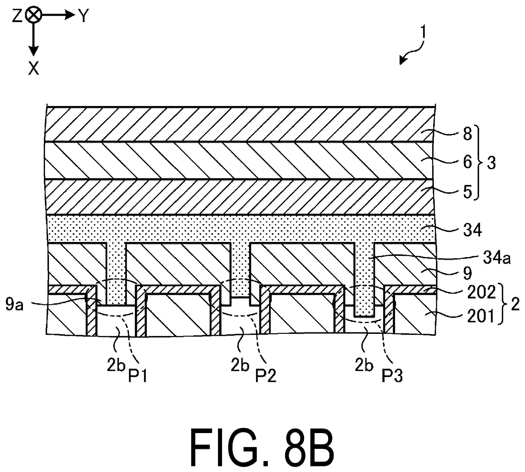

FIG. 8A and FIG. 8B are cross-sectional views illustrating other examples of the electrochemical cell according to the second embodiment. As illustrated in FIG. 8A, the adhesive layer 34 may include a portion 34a protruding into the interior of the oxide layer 9 towards the opening 2b. With such a portion 34a, a bonding strength between adhesive layer 34 and the oxide layer 9 is improved, for example, further improving the durability of the cell 1. Note that the oxide layer 9 may include a space 35 between the portion 34a and the opening 2b. Although not illustrated, the adhesive layer 34 may include a portion away from the opening 2b.

As illustrated in FIG. 8B, the oxide layer 9 may include a portion 9a protruding into the interior of the opening 2b. With such a portion 9a, a bonding strength between the oxide layer 9 and the support body 2 is improved, for example, further improving the durability of the cell 1.

The portion 34a of the adhesive layer 34 may extend through the oxide layer 9 to the opening 2b. In such a case, distal end portions of the portion 34a and the portion 9a may be located at substantially the same height (refer to, for example, a portion P1), the portion 9a may protrude more than the portion 34a (refer to, for example, a portion P2), or the portion 34a may protrude more than the portion 9a (refer to, for example, a portion P3). Note that the combination of the oxide layer 9 and the adhesive layer 34 may be regarded as a bonding layer between the support body 2 and the element portion 3. In this case, the oxide layer 9 may be regarded as a low porosity portion of the bonding layer, and the adhesive layer 34 may be regarded as a high porosity portion of the bonding layer.

### Third Embodiment

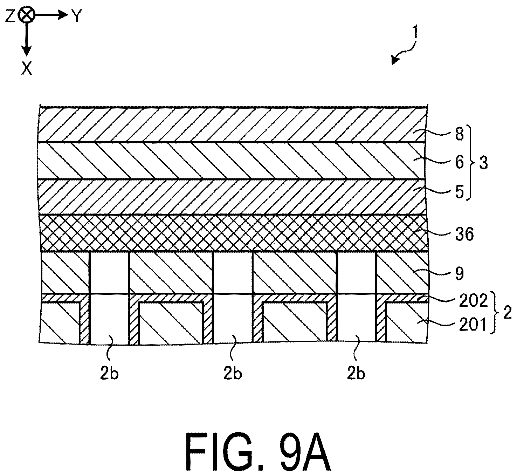

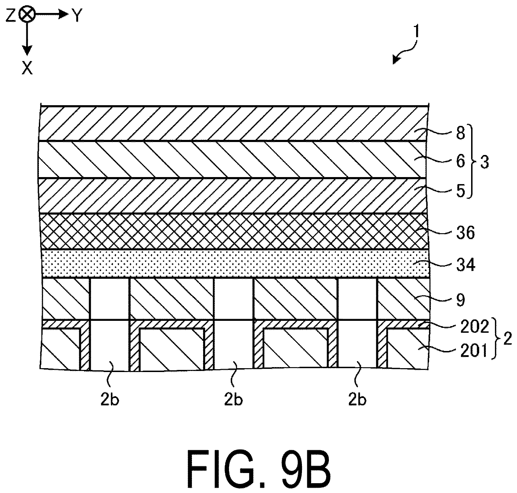

FIG. 9A is a cross-sectional view illustrating an example of the electrochemical cell according to a third embodiment. FIG. 9B is a cross-sectional view illustrating another example of the electrochemical cell according to the third embodiment. The cell 1 according to the present embodiment differs from the electrochemical cells according to the embodiments described above in that the cell 1 includes a constraining layer 36 located between the element portion 3 and the oxide layer 9 or between the element portion 3 and the adhesive layer 34.

A material of the constraining layer 36 has a contraction factor similar to that of the material of the solid electrolyte layer 6 at the time of firing. The element portion 3 obtained by sandwiching the material of the electrode layer 5 between the material of the solid electrolyte layer 6 and the material of the constraining layer 36 and then firing the materials has little warpage or deformation, improving the cell performance.

Note that, when a gas permeability of the constraining layer 36 is low such as when the material of the constraining layer 36 is the same as the material of the solid electrolyte layer 6, a plurality of through holes penetrating the constraining layer 36 in the thickness direction (X axis direction) may be located. The positions and shapes of such through holes may be the same as or may be different from those of the opening 2b.

### Other Embodiments

In the embodiments described above, a fuel cell, a fuel cell stack device, a fuel cell module, and a fuel cell device have been illustrated as examples of the "electrochemical cell," the "electrochemical cell device," the "module," and the "module housing device." However, as other examples, these may be an electrolytic cell, an electrolytic cell stack device, an electrolytic module, and an electrolytic device, respectively. The electrolytic cell includes a hydrogen electrode as a first electrode and an oxygen electrode as a second electrode and decomposes water vapor into hydrogen and oxygen or decomposes carbon dioxide into carbon monoxide and oxygen by supplying electrical power. Although an oxide ion conductor or a hydrogen ion conductor is illustrated as an example of the electrolyte material of the electrochemical cell in the above embodiment, the electrolyte material may be a hydroxide ion conductor. According to the electrolytic cell, electrolytic cell stack device, electrolytic module, and electrolytic device discussed above, performance can be improved.

While the present disclosure has been described in detail, the present disclosure is not limited to the aforementioned embodiments, and various changes, improvements, and the like can be made without departing from the gist of the present disclosure.

As described above, the electrochemical cell (cell 1) according to the embodiment includes the element portion 3, the support body 2 made of metal, and the oxide layer 9. The element portion 3 includes the solid electrolyte layer 6, and the first electrode (fuel electrode 5) and the second electrode (air electrode 8) with the solid electrolyte layer 6 therebetween. The support body 2 contains chromium and supports the element portion 3. The oxide layer 9 is located between the first electrode and the support body 2, and contains a metal component. The oxide layer 9 has a porosity lower than that of the first electrode. Thus, the performance of the cell 1 can be improved.

The electrochemical cell (cell 1) according to the embodiment includes the element portion 3, the support body 2 made of metal, the adhesive layer 34, and the oxide layer 9. The support body 2 contains chromium and supports the element portion 3. The adhesive layer 34 is located between the element portion 3 and the support body 2. The oxide layer 9 is located between the adhesive layer 34 and the support body 2 and contains a metal component. The oxide layer 9 has a porosity lower than that of the adhesive layer 34. Thus, the performance of the cell 1 can be improved.

The electrochemical cell device (cell stack device 10) according to the embodiment includes the cell stack 11 including the electrochemical cells described above. Thus, the performance of the cell stack device 10 can be improved.

The module 100 according to the embodiment includes the electrochemical cell device described above, and the storage container 101 housing the electrochemical cell device. Thus, the performance of the module 100 can be improved.

The module housing device 110 according to the embodiment includes the module 100 described above, the auxiliary device operating the module 100, and the external case housing the module 100 and the auxiliary device. Thus, the performance of the module housing device 110 can be improved.

Note that the embodiments disclosed herein are exemplary in all respects and not restrictive. The aforementioned embodiments can be embodied in a variety of forms. The aforementioned embodiments may be omitted, replaced, or changed in various forms without departing from the scope of the appended claims and the purpose thereof.

### REFERENCE SIGNS

1 Cell
2 Support body
3 Element portion
5 Fuel electrode
6 Solid electrolyte layer
8 Air electrode
9 Oxide layer
10 Cell stack device
34 Adhesive layer
100 Module
110 Module housing device

## Claims

1. An electrochemical cell comprising:
an element portion comprising:
a solid electrolyte layer; and
a first electrode and a second electrode with the solid electrolyte layer therebetween;
a support body made of metal, containing chromium, and supporting the element portion; and
an oxide layer located between the first electrode and the support body, and containing a metal component,
wherein the oxide layer has a porosity lower than that of the first electrode.

2. The electrochemical cell according to claim 1, wherein
the oxide layer contains an oxide of a first metal and a second metal different from the first metal.

3. The electrochemical cell according to claim 1 or 2, wherein
the support body comprises a covering located at a boundary with the oxide layer, and
the covering contains the metal component.

4. The electrochemical cell according to any one of claims 1 to 3, wherein
the oxide layer is located overlapping the support body in plan view.

5. The electrochemical cell according to any one of claims 1 to 4, wherein
the oxide layer contains nickel.

6. An electrochemical cell comprising:
an element portion;
a support body made of metal, containing chromium, and supporting the element portion;
an adhesive layer located between the element portion and the support body; and
an oxide layer located between the adhesive layer and the support body, and containing a metal component, wherein
the oxide layer has a porosity lower than that of the adhesive layer.

7. An electrochemical cell device comprising:
a cell stack comprising the electrochemical cell according to any one of claims 1 to 6.

8. A module comprising:
the electrochemical cell device according to claim 7; and
a storage container housing the electrochemical cell device.

9. A module housing device comprising:
the module according to claim 8;
an auxiliary device operating the module; and
an external case housing the module and the auxiliary device.
